# EUROPÄISCHE PATENTSCHRIFT

(11) **EP 3 095 065 B1**
(45) Veröffentlichungstag und Bekanntmachung des Hinweises auf die Patenterteilung: **02.12.2020**
(21) Anmeldenummer: 15705784.5
(22) Anmeldetag: 09.02.2015
(51) Int. Cl.: G06F 21/54

(54) **VORRICHTUNG UND VERFAHREN ZUM DETEKTIEREN EINER MANIPULATION AN EINEM PROGRAMMCODE**
DEVICE AND METHOD FOR DETECTING A MANIPULATION TO A PROGRAM CODE
DISPOSITIF ET PROCÉDÉ POUR DÉTECTER UNE MANIPULATION D'UN CODE DE PROGRAMME

(30) Priorität: 11.03.2014 DE 102014204417
(43) Veröffentlichungstag der Anmeldung: 23.11.2016
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2015/052572
(87) Internationale Veröffentlichungsnummer: WO 2015/135704

(56) Entgegenhaltungen:
- US-A1- 2003 023 856
- US-A1- 2007 005 992
- US-A1- 2012 233 446
- Sudip Chahal ET AL: "Evolution of Integrity Checking with Intel Trusted Execution Technology: an Intel IT Perspective", , 31. August 2010 (2010-08-31), XP055200016, Gefunden im Internet: URL:http://www.intel.com/content/dam/doc/w hite-paper/intel-it-security-trusted-execu tion-technology-paper.pdf [gefunden am 2015-07-03]
- SESHADRI A ET AL: "Pioneer: Verifying Code Integrity and Enforcing Untampered Code Execution on Legacy Systems", OPERATING SYSTEMS REVIEW (ACM) 2005 ASSOCIATION FOR COMPUTING MACHINERY US , Bd. 39, Nr. 5 23. Oktober 2005 (2005-10-23), Seiten 1-16, XP002553320, ISBN: 978-1-59593-079-8 Gefunden im Internet: URL:http://sparrow.ece.cmu.edu/~adrian/pro jects/pioneer.pdf [gefunden am 2009-11-02]

## Beschreibung

Die vorliegende Erfindung betrifft eine Vorrichtung zum Detektieren einer Manipulation an einem Programmcode. Des Weiteren betrifft die vorliegende Erfindung ein Rechensystem mit einer solchen Vorrichtung sowie ein entsprechendes Verfahren zum Detektieren einer Manipulation an einem Programmcode.

Vor allem in Safety-kritischen System, also Systemen, bei denen die Funktions- und Betriebssicherheit im Vordergrund steht, ist ein Schutz der Geräte- oder Systemintegrität, d.h. der Unverändertheit der installierten Software oder Firmware, ein wichtiger Faktor. Den Schutz der Geräteintegrität oder auch der Konfigurationsparameter sicherzustellen, unterstützt dabei die Integrität von Rechenergebnissen (Daten) und somit die Funktionalität der Geräte.

Aus WO 2012/135192 A2 ist es beispielsweise bekannt, durch einen Virtual Machine Monitor (VMM) zu überwachen, ob die Kommunikation mit einer virtuellen Maschine potentiell Schadcode enthält.

Allgemein sind Virenscanner bekannt, die zum Erkennen von Schadfunktionen, wie Computerviren oder Trojanischen Pferden, dienen. Des Weiteren sind Angriffserkennungssysteme (Intrusion Detection Systems) bekannt, die Angriffe, die auf ein Computersystem oder Computernetzwerk gerichtet sind, erkennen sollen (siehe auch http://de.wikipedia.org/wiki/Intrusion_Detection_System).

Aus DE 10 2006 036 111 B3 ist ein Verfahren und Prüfsystem zum sicheren Übertragen einer Nachricht von einer ersten Zone in eine zweite Zone bekannt. Dabei wird die Nachricht von der ersten Zone zu einer Auswerteeinheit einer dritten Zone mittels einer Datendiode übertragen. Kopien der Nachricht werden dabei verschiedenen Analyseeinheiten zur Verfügung gestellt, die diese prüfen und abhängig vom Auswerteergebnis aller Analyseeinheiten gegebenenfalls in eine zweite Zone weiterleiten. Eine Analyseeinheit kann nach erfolgreicher Analyse neu aufgesetzt werden, um eine mögliche Beeinträchtigung durch Malware zu vermeiden.

Des Weiteren ist ein sogenanntes "Secure Boot" bekannt (siehe http://www.webopedia.com/TERM/M/microsoft_secure_boot.html). Hierbei wird während des Startens bzw. Bootens eine Secure-Boot-Funktionalität bereitgestellt, um Schadsoftware daran zu hindern, während des Boot-Prozesses des Systems gestartet zu werden.

Ebenfalls bekannt ist ein Runtime Integrity Check (siehe http://www.intel.com/content/dam/doc/white-paper/intel-it-security-trusted-execution-technology-paper.pdf). Hierbei werden ebenfalls während des Startens eines Systems oder einer Anwendung Überprüfungen auf Schadsoftware oder Manipulationen durchgeführt.

Ferner offenbart die US 2007/0005992 A1 eine Messmaschine, welche eine aktive Plattformbeobachtung durchführt. Dabei beinhaltet ein Programm ein Integritätsmanifest, um einen Integritätsprüfwert für einen Abschnitt des Quellcodes des Programms anzugeben. Die Messmaschine berechnet einen Vergleichswert für das Abbild des Programms im Speicher und bestimmt, ob der Vergleichswert mit dem erwarteten Integritätsprüfwert übereinstimmt. Stimmen die Werte nicht überein, wird das Bild des Programms als zu modifizierend eingestuft und es können entsprechende Abhilfemaßnahmen eingeleitet werden.

Die Veröffentlichung "Evolution of Integrity Checking with Intel® Trusted Execution Technology: an Intel IT Perspective" offenbart eine auf einer speziellen Hardware basierende Lösung, die es erlaubt, regelmäßig nach kompromittierten Hypervisoren suchen zu können, ohne Geschäftsanwendungen zu unterbrechen. Dadurch kann eine schnellere Erkennung von Kompromittierungen ermöglicht werden, die Verbreitung von Malware eingedämmt werden und die Notwendigkeit eines Neuaufbaus von Hypervisors reduziert werden, wenn eine Kompromittierung erkannt wird.

Vor diesem Hintergrund besteht eine Aufgabe der vorliegenden Erfindung darin, auf einfache Weise Manipulationen an einem Programmcode nach Beendigung des Programmcodes zu erkennen.

Demgemäß wird eine Vorrichtung zum Detektieren einer Manipulation an einem Programmcode vorgeschlagen, wobei der Programmcode dazu eingerichtet ist, von einer Ausführungsumgebung auf einem Rechensystem ausgeführt zu werden, wobei die Ausführungsumgebung eine sichere Ausführungsumgebung ist. Die Vorrichtung weist eine Vergleichseinheit, welche dazu eingerichtet ist, Daten des Programmcodes mit Referenzdaten zur Bereitstellung eines Vergleichsergebnisses zu vergleichen, nachdem die Ausführungsumgebung einen Beendigungsbefehl an den Programmcode übergeben hat, und eine Detektionseinheit auf, welche dazu eingerichtet ist, basierend auf dem Vergleichsergebnis eine Manipulation an dem Programmcode zu detektieren. Die Vergleichseinheit ist ferner dazu eingerichtet, die Daten des Programmcodes mit weiteren Referenzdaten zu vergleichen, wenn das Rechensystem einen weiteren Beendigungsbefehl an die Ausführungsumgebung übergibt, wobei für den Vergleich nach oder während Beendigung des Programmcodes und den Vergleich nach oder während Beendigung der Ausführungsumgebung andere Referenzdaten verwendet werden.

Der Beendigungsbefehl kann an den Programmcode explizit z.B. als Betriebssystemereignis übergeben werden, sodass der Programmcode darauf reagieren kann. Ebenso ist möglich, dass der Beendigungsbefehl implizit übergeben wird, indem eine weitere Ausführung des Programmcodes durch die Ausführungsumgebung unterbleibt. Das Übergeben eines Beendigungsbefehls an den Programmcode kann z.B. durch einen Zeitgeber, eine Betriebsmittelüberwachungsfunktion der Ausführungsumgebung, über ein Steuersignal oder über eine Nutzerschnittstelle angestoßen werden.

Wie bereits oben erläutert, ist insbesondere in Safety-kritischen Bereichen die Integrität der Rechenergebnisse, beispielsweise der Ergebnisse eines Programmcodes, eine wichtige Anforderung. Hierbei ist es wichtig sicherzustellen, dass Angriffe, die während der Laufzeit eines Programmcodes erfolgen, d.h. eine Manipulation an dem Programmcode, erkannt und darauf reagiert werden kann. Durch die vorgeschlagene Vorrichtung wird es ermöglicht, die Daten des Programmcodes zu überprüfen, um mögliche Änderungen zu detektieren und entsprechend zu reagieren.

Unter Programmcode wird in diesem Zusammenhang eine Anwendung oder ein Computerprogramm verstanden, welche in einer eingebetteten Ausführungsumgebung auf einem Rechensystem, beispielsweise einem Computer, ausgeführt wird. Während der Ausführung erzeugt, verändert oder verwendet der Programmcode Daten, die hierin als Daten des Programmcodes bezeichnet werden. Bei einer Manipulation des Programmcodes werden diese Daten ebenfalls verändert. Wenn nun also diese veränderten Daten, die auf dem manipulierten Programmcode beruhen, mit Referenzdaten, die Daten entsprechen, wie durch einen nichtmanipulierten Programmcode entstehen würden oder existieren würden, verglichen werden, kann auf einfache Weise eine Manipulation an dem Programmcode nach dessen Beendigung oder während dessen Beendigung erkannt werden.

Die Vergleichseinheit kann die Daten des Programmcodes jederzeit, nachdem die Ausführungsumgebung einen Beendigungsbefehl an den Programmcode übermittelt hat, mit den Referenzdaten vergleichen. Eine erneute Ausführung des Programmcodes kann, je nach Vergleichsergebnis verhindert werden.

Die Ausführungsumgebung kann beispielsweise ein Betriebssystem sein, das auf dem Rechensystem installiert ist.

Unter Manipulation kann in diesem Zusammenhang jeder nicht erlaubte Eingriff von außen in den Programmcode, der zu nicht gewünschten Änderungen an dem Programmcode oder an mit diesen verbundenen Daten führt, verstanden werden. Eine Manipulation des Programcodes kann somit auch zu unerwünschten Änderungen der Ausführungsumgebung bzw. zu einer Manipulation an dieser führen.

Die jeweilige Einheit, zum Beispiel Vergleichseinheit oder Detektionseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform sind die Daten des Programmcodes der Programmcode selbst, durch den Programmcode erzeugte Daten und/oder durch den Programmcode verwendete Daten.

Da eine Manipulation an dem Programmcode detektiert werden soll, werden zur Überprüfung Daten verwendet, die den Programmcode selbst betreffen, d.h. Bestandteil des Programmcodes sind, oder Daten, die durch den Programmcode erzeugt oder verändert wurden. Eine Veränderung kann beispielsweise auch durch eine Verwendung der Daten durch den Programmcode erfolgen.

Gemäß einer weiteren Ausführungsform ist die Ausführungsumgebung eine sichere Ausführungsumgebung, insbesondere eine virtuelle Maschine bzw. ein virtueller Maschinen-Monitor oder ein Hypervisor oder eine Sandbox.

Unter einer sicheren Ausführungsumgebung wird eine Laufzeitumgebung (runtime environment) oder Ausführungsumgebung wie ein Computerprogramm verstanden, das gemeinsam mit einem Anwendungsprogramm, d.h. dem Programmcode, das nicht direkt mit dem Betriebssystem oder das direkt mit Hardware-Komponenten kommunizieren kann, ausgeführt wird und es auf dem jeweiligen Computer bzw. Rechensystem lauffähig, also ausführbar macht, indem es zwischen Anwendungsprogramm und Betriebssystem vermittelt. Beispiele für solche Ausführungsumgebungen sind virtuelle Maschinen (VM), virtuelle Maschinen-Monitore (VMM), Hypervisor, Separierungs-Kerne (Separation Kernel) oder Sandboxen.

Gemäß einer weiteren Ausführungsform ist die Vergleichseinheit ferner dazu eingerichtet, die Daten des Programmcodes mit weiteren Referenzdaten zu vergleichen, wenn das Rechensystem einen weiteren Beendigungsbefehl an die Ausführungsumgebung übergibt.

Die weiteren Referenzdaten können die Referenzdaten sein, wie sie oben beschrieben wurden. In diesem Fall führt die Vergleichseinheit den oben beschriebenen Vergleich erst durch, wenn sowohl der Programmcode als auch die Ausführungsumgebung beendet werden.

In einer weiteren Ausführungsform ist die Vergleichseinheit dazu eingerichtet, zwei Vergleiche durchzuführen, den ersten nach/während der Beendigung des Programmcodes und den zweiten nach/während der Beendigung der Ausführungsumgebung. Für jeden Vergleich kann die Vergleichseinheit andere Referenzdaten verwenden.

Gemäß einer weiteren Ausführungsform sind die weiteren Referenzdaten eine der Ausführungsumgebung zugeordnete Prüfsumme. Ferner entsprechen die Daten des Programmcodes Daten der Ausführungsumgebung, die während einer Laufzeit des Programmcodes durch den Programmcode erzeugt und/oder verwendet wurden.

Gemäß dieser Ausführungsform existiert für die Ausführungsumgebung eine Prüf- oder Checksumme, z.B. eine digitale Signatur, ein Message-Authentication Code (MAC) oder Hash-Wert. In die Ausführungsumgebung wird der Programmcode geladen und ausgeführt, der eine bestimmte Funktion, wie beispielsweise eine Berechnung umsetzt und ein Resultat liefert. Das Resultat wird nach der Berechnung in einem Datenspeicher abgelegt. Nach der Ausführung des Programmcodes wird die Ausführungsumgebung beendet. Der Speicherinhalt der Ausführungsumgebung, d.h. die Daten der Ausführungsumgebung, kann nun durch Bildung einer Checksumme mit dem Original (d.h. den weiteren Referenzdaten) auf Veränderungen geprüft werden. Wird eine Änderung an dem Speicherinhalt der Ausführungsumgebung selbst detektiert, kann dies als Manipulationsversuch durch den Programmcode erkannt werden.

Gemäß einer weiteren Ausführungsform ist die Vergleichseinheit dazu eingerichtet, Daten der Ausführungsumgebung bei einem Starten der Ausführungsumgebung mit weiteren Referenzdaten zu vergleichen.

Zusätzlich zu der Überprüfung nach Beendigung des Programmcodes und/oder der Ausführungsumgebung, d.h. einer Post-Mortem-Überprüfung, kann auch eine Überprüfung beim Starten der Ausführungsumgebung erfolgen. Dies wird auch als Secure-Boot bezeichnet.

Gemäß einer weiteren Ausführungsform sind die Daten des Programmcodes Daten, die in festgelegten Speicherbereichen eines Speichers des Rechensystems gespeichert sind, wobei die festgelegten Speicherbereiche während der Ausführung des Programmcodes nicht benötigt werden.

Gemäß dieser Ausführungsform sind Prüfstellen bzw. Prüfcode oder Prüfspeicherbereiche vorgesehen. Diese werden für die eigentliche Funktion des Programcodes nicht benötigt. Wenn der Programmcode jedoch durch Schadsoftware manipuliert wird, kann an diesen Prüfspeicherbereichen eine Manipulation erkannt werden. Dies hat den Vorteil, dass anstatt einer eventuell schwer überprüfbaren Hauptfunktion eine "Opferfunktion" überprüft werden kann. Eine Hauptfunktion kann z.B. dann schwer überprüfbar sein, wenn deren Code häufig aktualisiert wird, sodass ein Ermitteln des Referenzwerts für die Prüfung aufwendig wäre.

Gemäß einer weiteren Ausführungsform ist die Detektionseinheit dazu eingerichtet, eine detektierte Manipulation in einer Log-Tabelle zu speichern.

Diese Log-Tabelle oder einzelne Log-Einträge können an einen Log-Server übermittelt werden. Dieser Log-Server kann ein zentraler Rechner in einem Netzwerk sein, in das auch das Rechensystem eingebunden ist. Auf diese Weise können mehrere Rechensysteme innerhalb des Netzwerks ihre Log-Einträge bzw. detektierte Manipulationen miteinander austauschen.

Gemäß einer weiteren Ausführungsform weist die Vorrichtung eine Steuereinheit auf, die dazu eingerichtet ist, ein Manipulationswarnsignal von der Detektionseinheit im Falle einer detektierten Manipulation zu empfangen.

Die Steuereinheit kann basierend auf einem solchen Signal entscheiden, wie mit der detektierten Manipulation umgegangen werden soll. Das Manipulationswarnsignal kann auch Informationen über manipulierte Daten aufweisen.

Gemäß einer weiteren Ausführungsform ist die Steuereinheit dazu eingerichtet, zumindest eine Funktionalität des Programmcodes und/oder der Ausführungsumgebung in Abhängigkeit von dem empfangenen Manipulationswarnsignal zu sperren.

Auf diese Weise kann verhindert werden, dass manipulierte Daten weiter verwendet werden. Um eine persistente Auswirkung der Manipulation zu verhindern, kann es auch ausreichend sein, nur den Teil der Funktionalitäten des Programmcodes und/oder der Ausführungsumgebung zu sperren, der mit der Manipulation zusammenhängt oder auf manipulierte Daten zugreifen würde.

Gemäß einer weiteren Ausführungsform ist die Steuereinheit dazu eingerichtet, ein erneutes Ausführen des Programmcodes und/oder der Ausführungsumgebung in Abhängigkeit von dem empfangenen Manipulationswarnsignal zu sperren.

Gemäß dieser Ausführungsform wird das vollständige Neu-Starten des Programmcodes und/oder der Ausführungsumgebung verhindert. Durch das Verhindern des erneuten Bootens kann eine neue oder weitere Infizierung bzw. Manipulation vermieden werden.

Gemäß einer weiteren Ausführungsform ist der Programmcode dazu eingerichtet, eine Funktion auszuführen, die ein Ergebnis erzeugt und speichert. Ferner ist die Detektionseinheit dazu eingerichtet, das erzeugte Ergebnis basierend auf dem Vergleichsergebnis als kompromittiert oder nicht-kompromittiert zu markieren.

Das erzeugte Ergebnis kann auch als möglicherweise kompromittiert markiert werden. Basierend auf diesen Markierungen kann über die weitere Verwendung des Ergebnisses entschieden werden.

Gemäß einer weiteren Ausführungsform ist die Steuereinheit dazu eingerichtet, ein als kompromittiert markiertes Ergebnis zu verwerfen und/oder ein als nicht-kompromittiert markiertes Ergebnis zu speichern.

Ein gespeichertes Ergebnis kann weiter verwendet und ausgegeben werden. Ein verworfenes Ergebnis kann entsprechend nicht ausgegeben werden. Beispielsweise kann das Ergebnis des Programmcodes zwischengespeichert werden. Wenn die Integritäts-überprüfung, d.h. die Überprüfung auf eine Manipulation des Programmcodes, ergibt, dass dieser nicht manipuliert war, so erfolgt ein "Commit", d.h. eine dauerhafte Bestätigung bzw. Akzeptanz der Ergebnisse. Andernfalls können sie rückgängig gemacht werden (roll back).

Bei dem Programmcode kann es sich beispielsweise um ein Image für die Administration, z.B. über eine Web-Schnittstelle, oder ein Image für das Bereitstellen von Diagnosedaten handeln. Hierbei ist eine Netzwerkverbindung zu eventuell nicht vertrauenswürdigen externen Netzen erforderlich. Hier kann nun ein Image gestartet und für die vorgesehene Aufgabe genutzt werden. Bei Abmelden bzw. Beenden der Netzwerkverbindung wird das Image beendet und es wird dessen Integrität mittels der hier beschriebenen Vorrichtung überprüft. Abhängig vom Ergebnis der Integritätsprüfung wird die neue Konfigurationseinstellung übernommen und dauerhaft gespeichert, bzw. es wird das Ergebnis dem Backend-Diagnose-Server bereitgestellt und abhängig von der Bestätigung akzeptiert der Server die vorher bereitgestellten Diagnosedaten als gültig.

Der Vorteil der beschriebenen Vorrichtung liegt unter anderem in der Möglichkeit, einen potentiell kompromittierten Programmcode zu erkennen und somit die Gültigkeit des Resultats in Abhängigkeit eines Integritätschecks der Ausführungsumgebung nach der Programmabarbeitung zu überprüfen. Hierdurch kann z.B. Schadsoftware (Malware), die noch nicht bekannt ist oder für die noch keine Muster für Virenscanner oder ähnliches existieren, nicht zum Verfälschen eines Resultates führen. Ebenso ist es möglich, die vorgeschlagene Vorrichtung zum Auffinden von Schadsoftware zu nutzen.

Gemäß einem weiteren Aspekt wird ein Rechensystem vorgeschlagen, welches eine Ausführungsumgebung zur Ausführung eines Programmcodes und eine Vorrichtung zum Detektieren einer Manipulation an dem Programmcode aufweist, wie sie hierin erläutert ist.

Die Überprüfung und Detektion von Manipulationen durch die Vorrichtung erfolgt auf dem Rechensystem selbst, das die Ausführungsumgebung bereitstellt.

In einer weiteren Ausführungsform kann die Vorrichtung zum Detektieren einer Manipulation als separate Hardware-Komponente, d.h. als sogenannter Hardware-Watchdog, diese Überwachung vornehmen. So kann eine Prüfsumme eines Speicherbereichs erfasst und später überprüft werden. In einen Zwischenspeicher geschriebene Daten werden erst bei erfolgter Überprüfung in einen zweiten Speicher kopiert (z.B. ein dauerhafter Konfigurationsspeicher). In einer weiteren Ausführungsform ist die Vorrichtung Bestandteil eines Servers, dem beispielsweise ein Image bzw. ein Prüfwert (Hash-Wert, Checksum) des Images nach der Ausführung des Images (d.h. des Programmcodes) bereitgestellt wird.

Gemäß einem weiteren Aspekt wird ein Verfahren zum Detektieren einer Manipulation an einem Programmcode vorgeschlagen, wobei der Programmcode dazu eingerichtet ist, von einer Ausführungsumgebung auf einem Rechensystem ausgeführt zu werden. Das Verfahren weist die folgenden Schritte auf Vergleichen von Daten des Programmcodes mit Referenzdaten zur Bereitstellung eines Vergleichsergebnisses, nachdem die Ausführungsumgebung einen Beendigungsbefehl an den Programmcode übergeben hat, und Detektieren einer Manipulation an dem Programmcode basierend auf dem Vergleichsergebnis. Ferner umfasst das Verfahren ein Vergleichen von Daten des Programmcodes mit weiteren Referenzdaten zur Bereitstellung eines weiteren Vergleichsergebnisses, nachdem das Rechensystem einen weiteren Beendigungsbefehl an die Ausführungsumgebung übergeben hat, wobei für das Vergleichen nach oder während Beendigung des Programmcodes und das Vergleichen nach oder während Beendigung der Ausführungsumgebung andere Referenzdaten verwendet werden.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Blockschaltbild eines Ausführungsbeispiels einer Vorrichtung zum Detektieren einer Manipulation an einem Programmcode;
Fig. 2 zeigt ein schematisches Blockschaltbild eines Rechensystems mit einer Vorrichtung zum Detektieren einer Manipulation an einem Programmcode und einer Ausführungsumgebung;
Fig. 3 zeigt ein schematisches Ablaufdiagramm eines ersten Ausführungsbeispiels eines Verfahrens zum Detektieren einer Manipulation an einem Programmcode; und
Fig. 4 zeigt ein schematisches Ablaufdiagramm eines zweiten Ausführungsbeispiels eines Verfahrens zum Detektieren einer Manipulation an einem Programmcode.

In den Figuren sind gleiche oder funktionsgleiche Elemente mit denselben Bezugszeichen versehen worden, sofern nichts anderes angegeben ist.

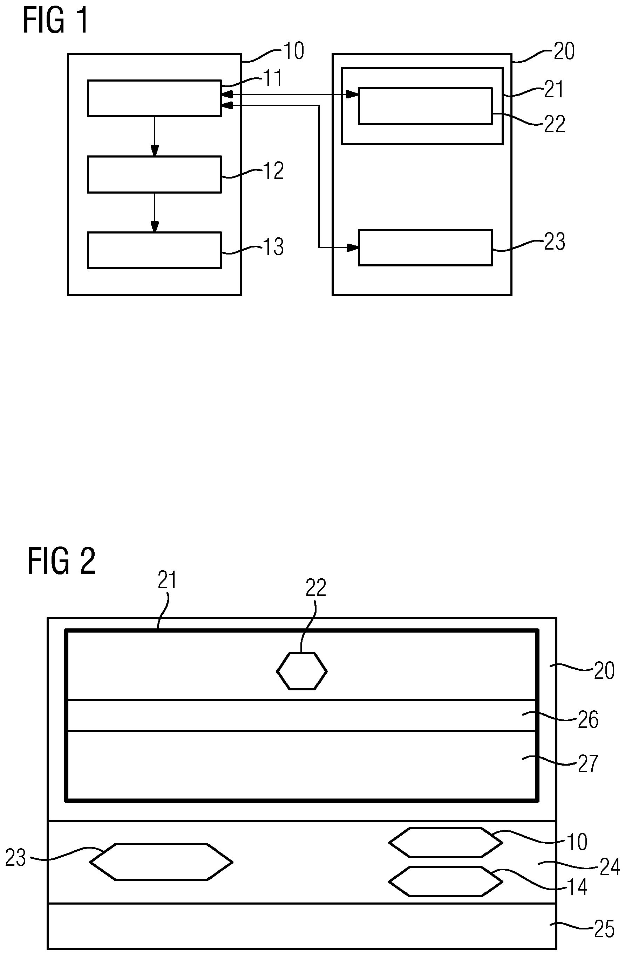

Fig. 1 zeigt eine Vorrichtung 10 zum Detektieren einer Manipulation an einem Programmcode 22.

Der Programmcode 22 wird durch eine Ausführungsumgebung 21 auf einem Rechensystem 20 ausgeführt. Bei dem Programmcode 22 kann es sich beispielsweise um eine Anwendung handeln, die in einer Ausführungsumgebung 21 wie einer virtuellen Maschine ausgeführt wird.

Die Vorrichtung 10 weist eine Vergleichseinheit 11 und eine Detektionseinheit 12 auf.

Nachdem die Ausführungsumgebung 21 einen Beendigungsbefehl an den Programmcode 22 übergeben hat, vergleicht die Vergleichseinheit 10 Daten des Programmcodes 22 mit Referenzdaten 23. Bei den Daten des Programmcodes 22 kann es sich um Daten handeln, die durch den Programmcode 22 erzeugt, verwendet oder verändert wurden, auch um Daten der Ausführungsumgebung 21 oder den Programmcode 22 selbst. Basierend auf dem Vergleich stellt die Vergleichseinheit 11 der Detektionseinheit 12 ein Vergleichsergebnis bereit.

Die Detektionseinheit 12 entscheidet basierend auf dem Vergleichsergebnis, ob eine Manipulation an dem Programmcode 22 vorliegt. Eine Manipulation an dem Programmcode kann zu einer Manipulation an der Ausführungsumgebung oder anderer Daten führen.

Wenn eine Manipulation detektiert wurde, sendet die Detektionseinheit 12 ein Manipulationswarnsignal 14 an eine Steuereinheit 13. Die Steuereinheit 13 kann dann die manipulierten Daten sperren oder verwerfen, eine erneute Ausführung des Programmcodes 22 verhindern oder andere Maßnahmen als Reaktion auf die Manipulation ergreifen.

Eine Ausführungsform eines Rechensystems 20 ist in Fig. 2 gezeigt.

Das Rechensystem 20 besteht aus Hardware 25. Auf dieser Hardware 25 ist ein Betriebssystem 24 des Rechensystems 20 vorgesehen. Dieses wiederum stellt eine Ausführungsumgebung 21 bereit. Die Ausführungsumgebung 21 kann hierbei eine virtuelle Maschine sein. Die virtuelle Maschine 21 weist eine virtuelle Hardware-Ebene 27 sowie in virtuelles Betriebssystem 26 auf.

Innerhalb der virtuellen Maschine 21 wird die Applikation 22, d.h. der Programmcode 22, geladen. Diese wird ausgeführt und erzeugt ein bestimmtes Resultat, das in einem Speicher 23 (Shared Data Speicher) zwischengespeichert wird. Die Vorrichtung 10 zum Detektieren einer Manipulation an dem Programmcode 22, auch Integrity Check Unit oder ICU genannt, prüft beispielsweise nach dem Herunterfahren der virtuellen Maschine 21 den Programmspeicher 23 auf mögliche Veränderungen und meldet diese über ein Alarmmodul als Manipulationswarnsignal 14.

Diese Überprüfung der Ausführungsumgebung 21 nach Beendigung der Ausführungsumgebung 21 kann als Gegenstück zu einem Secure Boot aufgefasst werden. Es wird nicht nur beim Start und während der Ausführung ein Integritätstest durchgeführt, sondern nach Beendigung der Ausführung des Programmcodes 22 und/oder der Ausführungsumgebung 21. Das Prüfen kann z.B. derart erfolgen, dass ein Image einer virtuellen Maschine (VM Image) nach Beendigung gespeichert wird und das gespeicherte Image geprüft wird. Bei einer Ausführungsumgebung 21, die direkt ausgeführt wird, kann der Speicherinhalt, der den Code der Ausführungsumgebung aufweist, beim Herunterfahren bzw. beim nächsten Neustart überprüft werden. Ein Bootloader bzw. BIOS bzw. unveränderbarer ROM-Code zum Booten und Herunterfahren kann daher den Speicherinhalt der bereits inaktiven Ausführungsumgebung 21 überprüfen. Dazu kann z.B. das ausgeführte Image mit dem Referenz-Image 23 verglichen werden, dass während des Boot-Vorgangs von einem Flash-Speicher in den RAM-Speicher geladen wird.

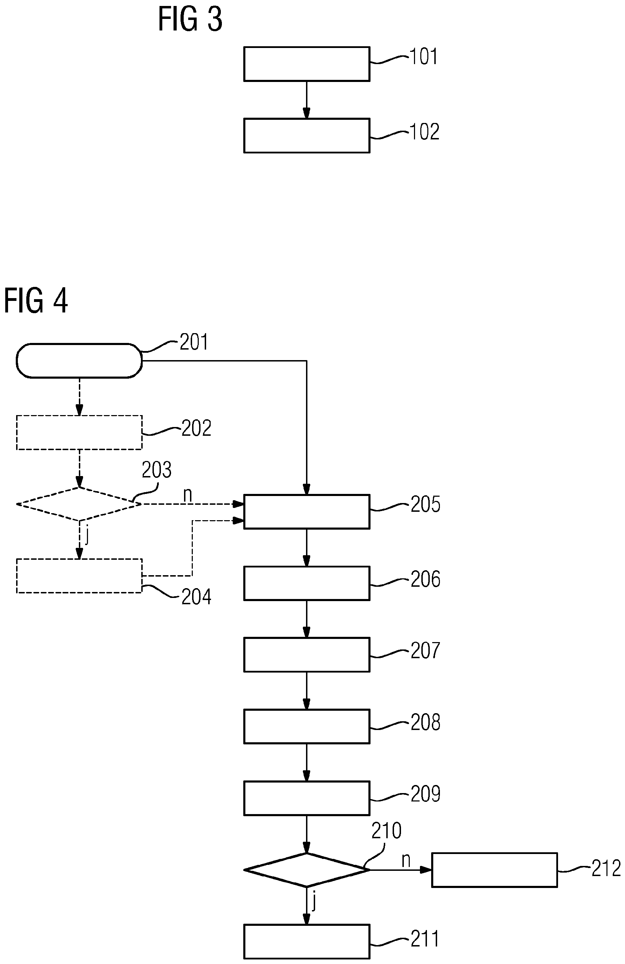

Fig. 3 zeigt ein Verfahren zum Detektieren einer Manipulation an einem Programmcode 22, wie es die oben beschriebene Vorrichtung 10 durchführt.

In einem ersten Schritt 101 werden Daten des Programmcodes 22 mit Referenzdaten 23 zur Bereitstellung eines Vergleichsergebnisses verglichen, nachdem die Ausführungsumgebung 21 einen Beendigungsbefehl an den Programmcode 22 übergeben hat.

In einem zweiten Schritt 102 wird eine Manipulation an dem Programmcode 22 basierend auf dem Vergleichsergebnis detektiert.

Fig. 4 zeigt ein weiteres Ausführungsbeispiel eines Verfahrens zum Detektieren einer Manipulation an einem Programmcode 22.

Nach dem Start 201 des Verfahrens kann in einem optionalen Zweig (mit gestrichelten Linien) zunächst die Existenz eines Referenzwerts 23 überprüft oder dieser erzeugt werden.

Zunächst wird überprüft, ob bereits ein Referenzwert 23 existiert (Schritt 202). In Schritt 203 wird entschieden, ob dies die Initialisierungsphase ist, d.h. noch kein Referenzwert 23 existiert. Ist es die Initialisierungsphase, wird in Schritt 204 ein Referenzwert 23 in dem Datenspeicher 23 gespeichert und das Verfahren anschließend bei Schritt 205 fortgesetzt. Ist es nicht die Initialisierungsphase, wird direkt zu Schritt 205 übergegangen.

Ohne diese optionalen Schritte 202-204 fängt das Verfahren direkt bei Schritt 205 an.

In Schritt 205 wird die Ausführungsumgebung 21 geladen. Anschließend wird in Schritt 206 der Programmcode 22, beispielsweise eine Anwendung zur Durchführung einer Berechnung und Bereitstellung eines Rechenergebnisses, geladen.

In Schritt 207 berechnet die Anwendung 22 ein Ergebnis und speichert dieses in einem Datenspeicher 23. Anschließend werden in Schritt 208 der Programmcode 22 sowie die Ausführungsumgebung 21 beendet bzw. heruntergefahren.

In Schritt 209 vergleicht nun die Vergleichseinheit 11 das Ergebnis und den Referenzwert. Ist der Vergleich erfolgreich (Schritt 210), d.h. stimmen die Ergebnisse überein, wird das Ergebnis zur weiteren Verwendung freigegeben (Schritt 211). Ist der Vergleich nicht erfolgreich, d.h. stimmen die Ergebnisse nicht überein, wird ein Manipulationswarnsignal 14 ausgegeben (Schritt 212).

Obwohl die vorliegende Erfindung anhand von Ausführungsbeispielen beschrieben wurde, ist sie vielfältig modifizierbar.

## Patentansprüche

1. Vorrichtung (10) zum Detektieren einer Manipulation an einem Programmcode (22), wobei der Programmcode (22) dazu eingerichtet ist, von einer Ausführungsumgebung (21) auf einem Rechensystem (20) ausgeführt zu werden, wobei die Ausführungsumgebung (21) eine sichere Ausführungsumgebung (21) ist, mit:
einer Vergleichseinheit (11), welche dazu eingerichtet ist, Daten des Programmcodes (22) mit Referenzdaten (23) zur Bereitstellung eines Vergleichsergebnisses zu vergleichen, nachdem die Ausführungsumgebung (21) einen Beendigungsbefehl an den Programmcode (22) übergeben hat, und
einer Detektionseinheit (12), welche dazu eingerichtet ist, basierend auf dem Vergleichsergebnis eine Manipulation an dem Programmcode (22) zu detektieren,
**dadurch gekennzeichnet, dass**
die Vergleichseinheit (11) ferner dazu eingerichtet ist, die Daten des Programmcodes (22) mit weiteren Referenzdaten zu vergleichen, wenn das Rechensystem (20) einen weiteren Beendigungsbefehl an die Ausführungsumgebung (21) übergibt,
wobei für den Vergleich nach oder während Beendigung des Programmcodes (22) und den Vergleich nach oder während Beendigung der Ausführungsumgebung (21) andere Referenzdaten verwendet werden.

2. Vorrichtung nach Anspruch 1,
**dadurch gekennzeichnet,**
**dass** die Daten des Programmcodes (22) der Programmcode (22) selbst, durch den Programmcode (22) erzeugte Daten und/oder durch den Programmcode (22) verwendete Daten sind.

3. Vorrichtung nach Anspruch 1 oder 2,
**dadurch gekennzeichnet,**
**dass** die Ausführungsumgebung (21) eine virtuelle Maschine oder eine Sandbox ist.

4. Vorrichtung nach Anspruch 1,
**dadurch gekennzeichnet,**
**dass** die weiteren Referenzdaten eine der Ausführungsumgebung (21) zugeordnete Prüfsumme sind, und dass die Daten des Programmcodes (22) Daten der Ausführungsumgebung (21) entsprechen, die während einer Laufzeit des Programmcodes (22) durch den Programmcode (22) erzeugt und/oder verwendet wurden.

5. Vorrichtung nach einem der Ansprüche 1 bis 4,
**dadurch gekennzeichnet,**
**dass** die Vergleichseinheit (11) dazu eingerichtet ist, Daten der Ausführungsumgebung (21) bei einem Starten der Ausführungsumgebung (21) mit weiteren Referenzdaten zu vergleichen.

6. Vorrichtung nach einem der Ansprüche 1 bis 5,
**dadurch gekennzeichnet,**
**dass** die Daten des Programmcodes (22) Daten sind, die in festgelegten Speicherbereichen eines Speichers (23) des Rechensystems (20) gespeichert sind, wobei die festgelegten Speicherbereiche während der Ausführung des Programmcodes (22) nicht benötigt werden.

7. Vorrichtung nach einem der Ansprüche 1 bis 6,
**dadurch gekennzeichnet,**
**dass** die Detektionseinheit (12) dazu eingerichtet ist, eine detektierte Manipulation in einer Log-Tabelle zu speichern.

8. Vorrichtung nach einem der Ansprüche 1 bis 7, **gekennzeichnet durch**
eine Steuereinheit (13), die dazu eingerichtet ist, ein Manipulationswarnsignal (14) von der Detektionseinheit (12) im Falle einer detektierten Manipulation zu empfangen.

9. Vorrichtung nach Anspruch 8,
**dadurch gekennzeichnet,**
**dass** die Steuereinheit (13) dazu eingerichtet ist, zumindest eine Funktionalität des Programmcodes (22) und/oder der Ausführungsumgebung (21) in Abhängigkeit von dem empfangenen Manipulationswarnsignal (14) zu sperren.

10. Vorrichtung nach Anspruch 8 oder 9,
**dadurch gekennzeichnet,**
**dass** die Steuereinheit (13) dazu eingerichtet ist,
ein erneutes Ausführen des Programmcodes (22) und/oder der Ausführungsumgebung (21) in Abhängigkeit von dem empfangenen Manipulationswarnsignal (14) zu sperren.

11. Vorrichtung nach einem der Ansprüche 1 bis 10,
**dadurch gekennzeichnet,**
**dass** der Programmcode (22) dazu eingerichtet ist, eine Funktion auszuführen, die ein Ergebnis erzeugt und speichert, und dass die Detektionseinheit (12) dazu eingerichtet ist, das erzeugte Ergebnis basierend auf dem Vergleichsergebnis als kompromittiert oder nicht-kompromittiert zu markieren.

12. Vorrichtung nach einem der Ansprüche 8 bis 11,
**dadurch gekennzeichnet,**
**dass** die Steuereinheit (13) dazu eingerichtet ist, ein als kompromittiert markiertes Ergebnis zu verwerfen und/oder ein als nicht-kompromittiert markiertes Ergebnis zu speichern.

13. Rechensystem (20), mit
einer sicheren Ausführungsumgebung (21) zur Ausführung eines Programmcodes (22) und
einer Vorrichtung (10) nach einem der Ansprüche 1 bis 12 zum Detektieren einer Manipulation an dem Programmcode (22).

14. Verfahren zum Detektieren einer Manipulation an einem Programmcode (22), wobei der Programmcode (22) dazu eingerichtet ist, von einer Ausführungsumgebung (21) auf einem Rechensystem (20) ausgeführt zu werden, wobei die Ausführungsumgebung (21) eine sichere Ausführungsumgebung (21) ist, mit:
Vergleichen (101) von Daten des Programmcodes (22) mit Referenzdaten (23) zur Bereitstellung eines Vergleichsergebnisses, nachdem die Ausführungsumgebung (21) einen Beendigungsbefehl an den Programmcode (22) übergeben hat, und
Detektieren (102) einer Manipulation an dem Programmcode (22) basierend auf dem Vergleichsergebnis
**gekennzeichnet durch**
ein Vergleichen von Daten des Programmcodes (22) mit weiteren Referenzdaten zur Bereitstellung eines weiteren Vergleichsergebnisses, nachdem das Rechensystem (20) einen weiteren Beendigungsbefehl an die Ausführungsumgebung (21) übergeben hat,
wobei für das Vergleichen (101) nach oder während Beendigung des Programmcodes (22) und das Vergleichen nach oder während Beendigung der Ausführungsumgebung (21) andere Referenzdaten verwendet werden.

## Claims

1. Device (10) for detecting manipulation of a program code (22), wherein the program code (22) is configured to be executed by an execution environment (21) on a computing system (20), wherein the execution environment (21) is a secure execution environment (21), having:
a comparator unit (11) which is configured to compare data of the program code (22) with reference data (23) in order to provide a comparison result, after the execution environment (21) has transferred a termination command to the program code (22), and
a detection unit (12) which is configured to detect manipulation of the program code (22) on the basis of the comparison result,
**characterized in that**
the comparator unit (11) is also configured to compare the data of the program code (22) with further reference data if the computing system (20) transfers a further termination command to the execution environment (21),
wherein other reference data is used for the comparison after or during the termination of the program code (22) and the comparison after or during the termination of the execution environment (21).

2. Device according to Claim 1,
**characterized**
**in that** the data of the program code (22) is the program code itself (22), data generated by the program code (22) and/or data used by the program code (22).

3. Device according to Claim 1 or 2,
**characterized**
**in that** the execution environment (21) is a virtual machine or a sandbox.

4. Device according to Claim 1,
**characterized**
**in that** the further reference data is a checksum assigned to the execution environment (21), and in that the data of the program code (22) corresponds to data of the execution environment (21) which has been generated and/or used by the program code (22) during a runtime of the program code (22).

5. Device according to one of Claims 1 to 4,
**characterized**
**in that** the comparator unit (11) is configured to compare data of the execution environment (21) with further reference data when the execution environment (21) starts.

6. Device according to one of Claims 1 to 5,
**characterized**
**in that** the data of the program code (22) is data which is stored in defined memory areas of a memory (23) of the computing system (20), wherein the defined memory areas are not required during the execution of the program code (22).

7. Device according to one of Claims 1 to 6,
**characterized**
**in that** the detection unit (12) is configured to store detected manipulation in a log table.

8. Device according to one of Claims 1 to 7,
**characterized by**
a control unit (13) which is configured to receive a manipulation warning signal (14) from the detection unit (12) in the event of detected manipulation.

9. Device according to Claim 8,
**characterized**
**in that** the control unit (13) is configured to block at least one functionality of the program code (22) and/or of the execution environment (21) as a function of the received manipulation warning signal (14).

10. Device according to Claim 8 or 9,
**characterized**
**in that** the control unit (13) is configured to block renewed execution of the program code (22) and/or of the execution environment (21) as a function of the received manipulation warning signal (14).

11. Device according to one of Claims 1 to 10,
**characterized**
**in that** the program code (22) is configured to execute a function which generates and stores a result, and in that the detection unit (12) is configured to mark the generated result on the basis of the comparison result as compromised or non-compromised.

12. Device according to one of Claims 8 to 11,
**characterized**
**in that** the control unit (13) is configured to reject a result which is marked as compromised and/or to store a result which is marked as non-compromised.

13. Computing system (20) having
a secure execution environment (21) for executing a program code (22) and
a device (10) according to one of Claims 1 to 12 for detecting manipulation of the program code (22).

14. Method for detecting manipulation of a program code (22), wherein the program code (22) is configured to be executed by an execution environment (21) on a computer system (20), wherein the execution environment (21) is a secure execution environment (21), comprising:
comparing (101) data of the program code (22) with reference data (23) in order to make available a comparison result after the execution environment (21) has transferred a termination command to the program code (22), and
detecting (102) manipulation of the program code (22) on the basis of the comparison result,
**characterized by**
comparing data of the program code (22) with further reference data in order to make available a further comparison result after the computing system (20) has transferred a further termination command to the execution environment (21),
wherein other reference data is used for the comparison (101) after or during termination of the program code (22) and the comparison after or during termination of the execution environment (21).

## Revendications

1. Dispositif (10) pour détecter une manipulation d'un code de programme (22), le code de programme (22) étant configuré pour être exécuté par un environnement d'exécution (21) sur un système informatique (20), l'environnement d'exécution (21) étant un environnement d'exécution sûr (21), comportant :
une unité de comparaison (11) qui est configurée pour comparer des données du code de programme (22) avec des données de référence (23) pour fournir un résultat de comparaison après que l'environnement d'exécution (21) a transmis une commande de terminaison au code de programme (22) et
une unité de détection (12) qui est configurée pour détecter, sur la base du résultat de comparaison, une manipulation du code de programme (22),
**caractérisé en ce que**
l'unité de comparaison (11) est en outre configurée pour comparer les données du code de programme (22) avec d'autres données de référence lorsque le système informatique (20) transmet une autre commande de terminaison à l'environnement d'exécution (21),
d'autres données de référence étant utilisées pour la comparaison après ou pendant la terminaison du code de programme (22) et la comparaison après ou pendant la terminaison de l'environnement d'exécution (21).

2. Dispositif selon la revendication 1, **caractérisé en ce que** les données du code de programme (22) sont le code de programme (22) lui-même, des données générées par le code de programme (22) et/ou des données utilisées par le code de programme (22).

3. Dispositif selon la revendication 1 ou 2, **caractérisé en ce que** l'environnement d'exécution (21) est une machine virtuelle ou un bac à sable.

4. Dispositif selon la revendication 1, **caractérisé en ce que** les autres données de référence sont une somme de contrôle affectée à l'environnement d'exécution (21) et **en ce que** les données du code de programme (22) correspondent à des données de l'environnement d'exécution (21) qui ont été générées et/ou utilisées par le code de programme (22) pendant un temps de fonctionnement du code de programme (22).

5. Dispositif selon l'une des revendications 1 à 4, **caractérisé en ce que** l'unité de comparaison (11) est configurée pour comparer des données de l'environnement d'exécution (21) avec d'autres données de référence lors d'un démarrage de l'environnement d'exécution (21).

6. Dispositif selon l'une des revendications 1 à 5, **caractérisé en ce que** les données du code de programme (22) sont des données qui sont stockées dans des zones de mémoire déterminées d'une mémoire (23) du système informatique (20), les zones de mémoire déterminées n'étant pas requises pendant l'exécution du code de programme (22).

7. Dispositif selon l'une des revendications 1 à 6, **caractérisé en ce que** l'unité de détection (12) est configurée pour sauvegarder une manipulation détectée dans une table de journalisation.

8. Dispositif selon l'une des revendications 1 à 7, **caractérisé par** une unité de commande (13) qui est configurée pour recevoir de l'unité de détection (12) un signal d'avertissement de manipulation (14) en cas de manipulation détectée.

9. Dispositif selon la revendication 8, **caractérisé en ce que** l'unité de commande (13) est configurée pour bloquer au moins une fonctionnalité du code de programme (22) et/ou de l'environnement d'exécution (21) en fonction du signal d'avertissement de manipulation reçu (14).

10. Dispositif selon la revendication 8 ou 9, **caractérisé en ce que** l'unité de commande (13) est configurée pour bloquer une nouvelle exécution du code de programme (22) et/ou de l'environnement d'exécution (21) en fonction du signal d'avertissement de manipulation reçu (14).

11. Dispositif selon l'une des revendications 1 à 10, **caractérisé en ce que** le code de programme (22) est configuré pour exécuter une fonction qui génère et sauvegarde un résultat et **en ce que** l'unité de détection (12) est configurée pour marquer le résultat généré, sur la base du résultat de comparaison, comme compromis ou non compromis.

12. Dispositif selon l'une des revendications 8 à 11, **caractérisé en ce que** l'unité de commande (13) est configurée pour rejeter un résultat marqué comme compromis et/ou sauvegarder un résultat marqué comme non compromis.

13. Système informatique (20) comportant
un environnement d'exécution sûr (21) pour exécuter un code de programme (22) et
un dispositif (10) selon l'une des revendications 1 à 12 pour détecter une manipulation du code de programme (22).

14. Procédé pour détecter une manipulation d'un code de programme (22), le code de programme (22) étant configuré pour être exécuté par un environnement d'exécution (21) sur un système informatique (20), l'environnement d'exécution (21) étant un environnement d'exécution sûr (21), comportant :
la comparaison (101) de données du code de programme (22) avec des données de référence (23) pour fournir un résultat de comparaison après que l'environnement d'exécution (21) a transmis une commande de terminaison au code de programme (22) et
la détection (102) d'une manipulation du code de programme sur la base du résultat de comparaison,
**caractérisé par**
une comparaison de données du code de programme (22) avec d'autres données de référence pour fournir un autre résultat de comparaison après que le système informatique (20) a transmis une autre commande de terminaison à l'environnement d'exécution (21),
d'autres données de référence étant utilisées pour la comparaison (101) après ou pendant la terminaison du code de programme (22) et la comparaison après ou pendant la terminaison de l'environnement d'exécution (21).
